# EUROPEAN PATENT SPECIFICATION

(11) **EP 1 699 211 B1**
(45) Date of publication and mention of the grant of the patent: **23.07.2008**
(21) Application number: 05101698.8
(22) Date of filing: 04.03.2005
(51) Int. Cl.: H04M 1/05, H04M 1/60

(54) **A learning headset**
Lernkopfhörer
Casque d'écoute possédant des capacités d'apprentissage

(43) Date of publication of application: 06.09.2006
(73) Proprietor: Sennheiser Communications A/S, 2680 Solroed Strand (DK)
(72) Inventor: Christiansen, Torben, 2680 Solroed Strand (DK); Kock, Jesper, 2680 Solroed Strand (DK)
(74) Representative: Nielsen, Hans Jörgen Vind

(56) References cited:
- WO-A-03/055183
- WO-A-20/04114722
- DE-U1-0202004 001 41
- US-A- 6 104 822
- US-A1- 2004 137 969

## Description

### Field of invention

This invention relates to a headset for communicating sound to a user such as Hi-Fi systems, computers, cellular or mobile phones, and ordinary phones. In particular, this invention relates to a headset, which adapts to the surrounding acoustic environment.

### Background of invention

Today headsets are used in a wide range of situations, such as when driving in a car, when playing computer games or music, when working in offices, or when working out, for both communication and controlling purposes. American patent application US 2003/0118197, which herby is incorporated by reference in the present specification, discloses a headset with an external sound detection microphone for converting external sound to an external sound signal, a transceiver for receiving radio signals and converting these to a communicated sound signal, and a speech processing unit changing the ratio between of external sound signal and the communicated sound signal in accordance with the users selections. That is, the user may in select a plurality of modes wherein the external or communicated sound signal dominates. However, as the use of headsets has become even more versatile in situations where free hands are essential user interaction in various acoustic situations becomes disadvantageous.

WO 03/055183 deals with a headset for wirelessly communicating with a communications device, e.g. a telephone. WO 03/055183 is aimed at substituting manual switches for starting or ending communication with the communications device and for increasing or decreasing voice volume. The automatization is based on a comparison of current values of specific parameters (such as voice volume and level of a signal received from the communications device) with stored reference values.

WO 2004/114722 deals with a binaural hearing aid system comprising a binaural sound environment detector for binaural determination of the sound environment surrounding a user of the binaural hearing aid system based on at least one signal from the first hearing aid and at least one signal from the second hearing aid for provision of outputs for each of the first and second hearing aids for selection of a signal processing algorithm of each of the respective hearing aid processors so that the hearing aids of the binaural bearing aid system perform coordinated sound processing.

US 6,104,822 deals with a digital signal processing hearing aid having a plurality of digital signal processing means for processing input digital signals, each being designed to provide optimal results in a particular listening environment, and a selector switch manipulable by a user for choosing which of the processing means to utilize.

### Summary of the invention

An object of the present invention is to provide a headset which automatically adapts to the surrounding acoustic environment.

A particular advantage of the present invention is the provision of a self-learning headset adapting not only to the acoustic environments in which a user temporarily acts but also to the acoustic environments in which the user acts over a longer term.

A particular feature of the present invention is the provision of a data logger for generating an historic perspective of the use of the headset as well as a user's interactions with the headset controls during various acoustic environments.

The above object, advantage and feature together with numerous other objects, advantages and features, which will become evident from below detailed description, are obtained according to a first aspect of the present invention by a headset for communicating with a communication device as defined by claim 1.

The term "signal processing setting" is in this context to be construed as a mode of operation, program, or software, to be executed by a processor.

The term "a" or "an" is in this context to be construed as one or more.

The term "environmental data" is in this context to be construed as data describing surrounding acoustic environment of the input section of the headset, data describing the signal quality of received signal from a connecting communication device.

The adaptation means according to the first aspect of the present invention may comprise an environment unit adapted to generate the environmental data, such as a voice identification signal, a noise level signal, a wind level signal, from the first signal. The environment unit may have a voice detector for detecting voice of a user of the headset, a noise detector for classifying noise level of the surround acoustic environment, and a wind detector for detecting wind sound effects in the surrounding acoustic environment. The environment unit may further comprise a microphone matching utility for matching the one or more microphones. In addition, the environment unit may further comprise a directionality utility for canceling disturbing far field noise and preserving nearfield signal (signal from the mouth of the user of the headset). Please note that the output will be a single signal made out of the first and second signal.

The adaptation means according to the first aspect of the present invention may further comprise a processor unit having an environment input adapted to receive the environmental data, having a categorisation element adapted to categorise the surrounding acoustic environment based on the environmental data, having an input/output port adapted to connect to a memory unit storing one or more signal processing settings, having a selecting element adapted to select that signal processing setting associated with the surrounding acoustic environment, and having a control output adapted to control a signal processing unit in accordance with the signal processing setting.

The signal processing unit according to the first aspect of the present invention may comprise a filter bank adapted to filter the first and second signal into one or more frequency bands, an amplifier adapted to expand and/or compress signal in the one or more frequency bands. The signal processing unit may further comprise a noise reduction element adapted to reduced noise in the first and second signal.

The processor unit according to the first aspect of the present invention may further comprise a user input/output port adapted to connect with a user-interface unit adapted to enable a user of the headset to adjust parameters of the signal processing setting. Thus the user of the headset may by using the user interface, such as a keypad, keyboard or single buttons, adjust the signal processing performed by the signal processing unit. The processor unit may further comprise a remark element adapted to generate a remark associated with current signal processing setting and to store said remark in the memory in association with the signal processing setting. The remark may comprise information regarding the surrounding acoustic environment, the processor unit's categorisation of said surrounding acoustic environment, and finally the user's actions, i.e. increasing/decreasing volume or changing to other setting. Hence the user's actions on the user interface are recorded and stored in the memory unit in association with the currently running signal processing setting. The processor unit may thus utilise the remarks for adjusting the parameters of the signal processing setting in accordance with the user's own perception of the environment as well as the user's perception of the sound presented by the headset.

The processor unit according to the first aspect of the present invention may further comprise an averaging element adapted to average the parameters stored in remarks associated with a specific signal processing setting. Thus one possible utilisation of the remarks is averaging of the individual parameters recorded in each remark, thereby achieving a total average for each parameter recorded in any number of remarks stored for one signal processing setting. Alternatively, the parameters of the remarks may be used for adjusting the signal processing setting in accordance with a timing function. Thus when the remarks are generated by the user interaction may be weighted, for example, changes made more recently have larger weight than changes made for some time ago.

The processing section according to the first aspect of the present invention may further comprise a transceiver unit adapted to transmit the first processed signal to the communication device, and adapted to receive the second signal from the communication device. The transceiver may comprise a first protocol element adapted to communicate with a first communication network and a second protocol element adapted to communicate with a second communication network. The headset may thus be utilised for communicating with several communication devices having using different communication protocols, such as Bluetooth class 1, 2 or 3, and wireless local area network, or wireless telecommunications network such as based on digital enhanced cordless telephone (DECT) or global system for mobile communication (GSM) technologies.

### Brief description of the drawings

The above, as well as additional objects, features and advantages of the present invention, will be better understood through the following illustrative and non-limiting detailed description of preferred embodiments of the present invention, with reference to the appended drawing, wherein:
figure 1, shows a block diagram of a communication system enabling a user to communicate with a wide variety of communication tools;
figure 2, shows a block diagram of a headset according to a first embodiment; and
figure 3, shows a block diagram of a transceiver unit of the headset according to the first embodiment.

### Detailed description of preferred embodiments

In the following description of the various embodiments, reference is made to the accompanying figures, which show by way of illustration how the invention may be practiced. It is to be understood that other embodiments may be utilized and structural and functional modifications may be made without departing from the scope of the present invention.

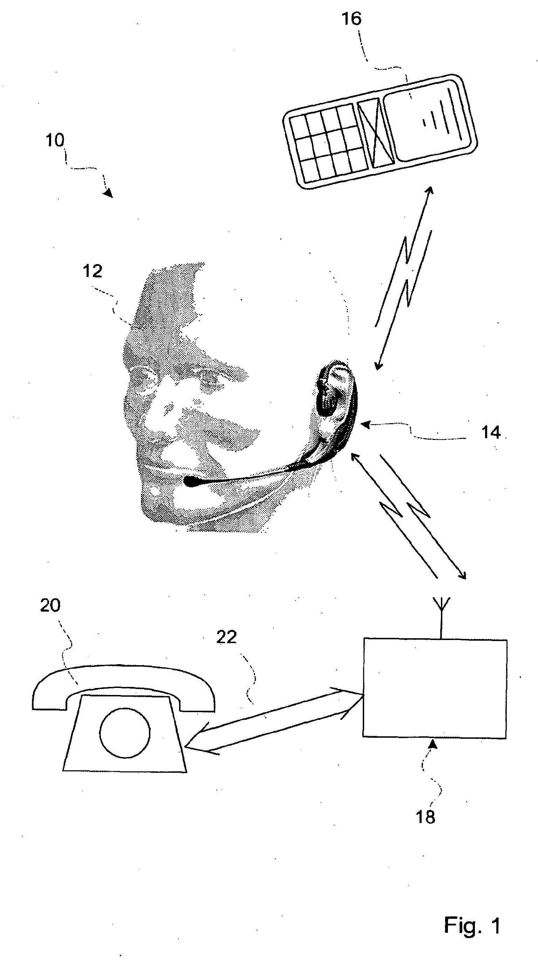

Figure 1 shows a block diagram of a communication system designated in entirety by reference numeral 10. The communication system 10 enables a user 12 wearing a headset 14 to communicate directly with a cellular or mobile telephone, a personal computer (PC), a personal digital assistant (PDA), and similar devices, through a first wireless connection and to communicate with an office unit 18 through a second wireless connection. The office unit 18 enables the user 12 to communicate with a wide variety of electronic equipment 20 through a wired connection 22. The electronic equipment 20 may comprise a public switched telephone network (PSTN) telephone, as shown in figure 1, or a PC, PDA or similar communication means. In addition, the electronic equipment 20 may be any voice-controllable equipment, such as automatic doors, light etc.

The first and second wireless connection is established by Bluetooth. That is, the first wireless connection may, for example, be established by Bluetooth class 2 while the second wireless connection may be established by Bluetooth class 1. Obviously, the first and second wireless connection may be established by identical communication protocols.

Hence the headset 14 may be utilised for a wide variety of communication purposes. For example, the user 12 may receive and answer a call on his mobile telephone 16, or may receive and answer a call on his office telephone 20 connecting to the office unit 20. Thus the communication system 10 enables the user 12 of the headset 14 hands free control of a plurality of devices connecting either directly to the headset 14 or indirectly through the office unit 18.

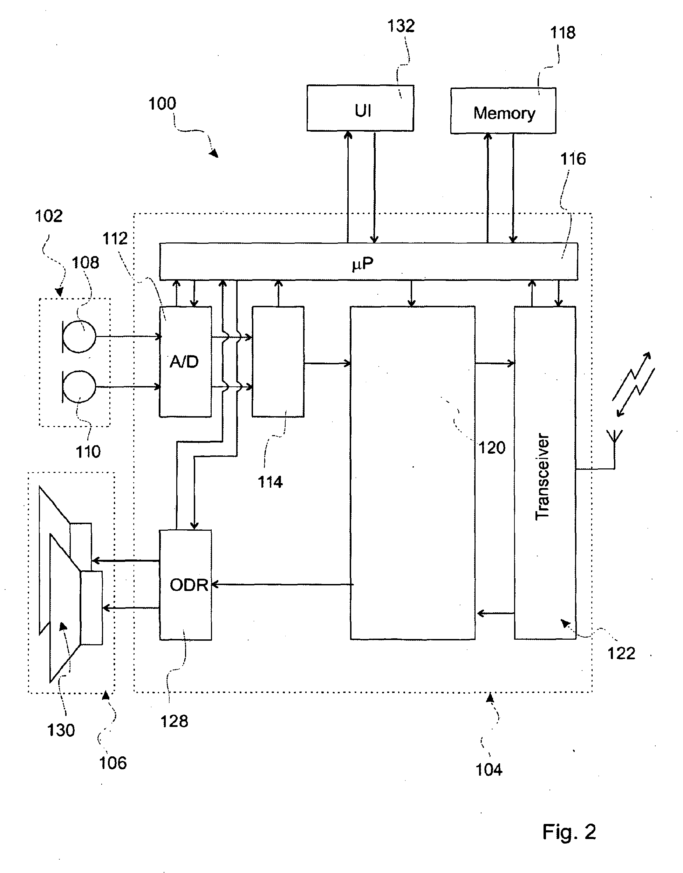

Figure 2 shows a block diagram of a headset according to a first embodiment of the present invention, which headset is designated in entirety by reference numeral 100 and comprising an input section 102, a processing section 104, and an output section 106.

The input section 102 comprises one or more microphones 108, 110 for detecting sound in the surroundings of the user of the headset 100. The first microphone 108, shown in figure 2, converts the sound of the surroundings into a first electric signal, and, similarly, the second microphone 110 converts the sound of the surroundings into a second electric signal. The first and second signals are communicated to an analogue-to-digital (A/D) converter 112 in the processing section 104, which A/D converter 112 converts the first and second electric signals into a first and second digital signal. The A/D converter 112 may comprise an A/D converter element for each microphone 108, 110. Further, the A/D converter 112 may comprise an analogue gain limiter for limiting the maximum input level of the first and second electric signals controlled by level estimation in the digital path. For example, in case the input level is above a critical threshold value, e.g. 94dB sound pressure level (SPL), which may result in an unpleasant sound pressure level presented to the user of the connected communication devices and the headset 100.

The first and second digital signals are communicated to an environment unit 114 of the processing section 104. The environment unit 114 comprises a voice detector for detecting voice of the user; a noise detector for classifying noise level of the surround acoustic environment; and a wind detector for detecting wind sound effects in the surrounding acoustic environment. The environment unit 114 may further comprise a microphone matching utility for matching the one or more microphones 108, 110. In addition, the environment unit 114 may further comprise a directionality utility for canceling disturbing far field noise and preserving nearfield signal (signal from the mouth of the user of the headset).
The environment unit 114 communicates environmental data, such as a voice detection signal, a noise level signal, and a wind signal, to a processor unit 116 in the processing section 104. The processor unit 116 utilises the environmental data to categorise the surrounding acoustic environment and, subsequently, the processor unit 116 selects a signal processing setting from a memory 118 in accordance with the categorised surrounding acoustic environment. Hence the processor unit 116 is capable of, on the basis of the data received from the environment unit 114, selecting an appropriate signal processing setting for a signal processing unit 120 in the processing section 104.

The signal processing setting determines how the processor unit 116 controls the signal processing unit 120. That is, the signal processing settings determine how any plurality of frequency bands are to be amplified, and how the signal-to-noise ratio (S/N) is optimised in a particular surrounding acoustic environment, or rather how the overall sound quality is improved.

The memory 118 comprises a plurality of signal processing settings associated with a wide range of possible acoustic environments, and the processor unit 116, firstly, categorises the surrounding acoustic environment and, secondly, extracts the associated signal processing settings from the memory 118 and, finally, controls the signal processing unit 120 to optimise the overall sound quality for the user in said surrounding acoustic environment. The signal processing unit 120 comprises signal functions such as equalisation, volume, amplification (compression, expansion) and noise reduction.

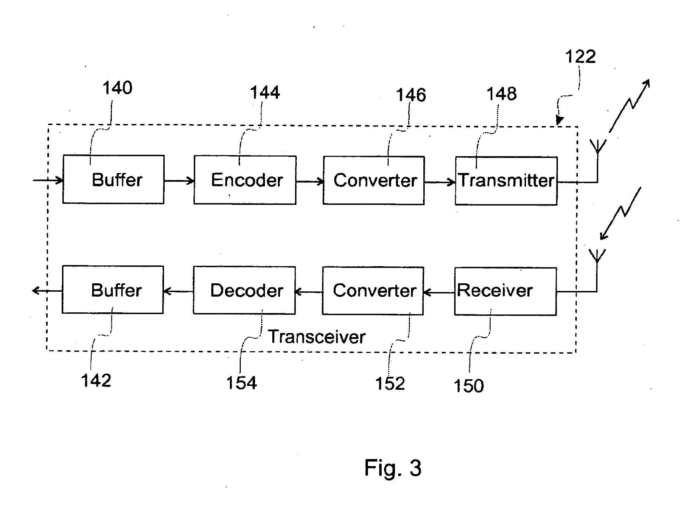

A processed digital signal is forwarded from the output of the signal processing unit 120 to a transceiver unit 122 converting the processed digital signal into a transmission data signal, such as one or more data packages, and transmitting this data signal to a receiver such as a mobile telephone 16 or office unit 18 described with reference to figure 1. The operation of the transceiver unit 122 is further described below with reference to figure 3.

The transceiver unit 122 of the headset 100 may further receive transmission data from the electronic equipment connecting thereto and thus the transceiver unit 122 converts the received transmission data signal. The converted transmission data signal is, subsequently, communicated to the signal processing unit 120 adapted to process the received data signal in accordance with any of the stored signal processing settings so as to obtain the best sound for the surrounding acoustic environment. The processor unit 116 communicates with the processing unit 120 and may utilise the converted transmission data signal for further determining an appropriate signal processing setting or adjusting of presently selected signal processing setting. Hence signal processing settings may be different for the data to be transmitted and the data received.

In an alternative embodiment the processing section 104 further comprises a second environment unit, similar to the environment unit 114, which second environment unit interconnects the transceiver unit 122 and the signal processing unit 120, and which second environment unit is adapted to perform environmental signal analysis on the data received by the transceiver unit 122 such as performed by the environment unit 114. Hence this provides an embodiment wherein the sound presented to the user is processed in accordance with the surrounding acoustic environment of the user as well as the quality of the received signal.

The signal processing unit 120 further comprises a function unit for generating a side tone for compensating blocking of the natural feedback of signal from the mouth to the ear of the headset user. The function unit thus enables the user of the headset 100 to receive his own voice in the loudspeaker. The processor unit 116 may thus control the function unit in accordance with the surrounding acoustic environment so that the user is continuously presented with an optimum part of input sound.

Finally, the processing section 104 comprises an output driver (ODR) 128 for driving the output section 106 with the signal from the signal processing unit 120.

The output section comprises one or more loudspeakers 130 driven by the output driver 128 to provide a sound. Obviously, the headset 100 may comprise any number of loudspeakers, which may be cased in either one case for one ear or two cases for both ears. Each case may thus comprise a number of loudspeakers improving the sense of sound directionality for the user, such as experienced by surround sound processing. The headset 100 further comprises a user interface (UI) 132 enabling the user of the headset 100 to manually control the functioning of the processing section 104. The user interface 132 communicates with the processor unit 116 when the user desires to change the signal processing setting chosen by the processor unit 116 in accordance with the processor unit's 116 categorisation of the surrounding acoustic environment. The user interface 126 enables the user to change the volume, i.e. amplification of the sound, and the overall signal processing setting, i.e. the operating mode or program.

When the user changes either volume or signal processing setting through the user interface 132, the processor unit 116, firstly, changes the signal processing settings accordingly and, secondly, stores a remark associated with the signal processing settings. Thus the processor unit 116 performs a data logging of the user's interactions with the headset 100.

Each remark comprises information regarding the surrounding acoustic environment, the processor unit's 116 categorisation of said surrounding acoustic environment, and finally the user's actions, i.e. increasing/decreasing volume or changing to other setting. A number of remarks are stored in the memory 118 associated with each signal processing setting for every recorded surrounding acoustic environment. The processor unit 116 may thus continuously utilise the remarks associated with a specific categorised surrounding acoustic environment for reconfiguring the signal processing setting for said specific surrounding acoustic environment. For example, the processor unit 116 may count ten remarks for a specific signal processing setting and revised the specific signal processing setting in accordance with an average for the values of the remarks. Hence over time the headset 100 learns in which acoustic environments the user generally operates, as well as how the user prefers the headset 100 to present sound in the acoustic environments in which the user operates.

Figure 3 shows a block diagram of the transceiver unit 122 comprising a first and second buffer 140, 142 for buffering data between the transceiver unit 122 and the first and second processing unit 120, 124. The data to be transmitted from the headset 100 is communicated from the first buffer 140 to an encoder 144 encoding the data into a transmittable format such as any in accordance with any modulation techniques and in accordance with any communication protocol. In the preferred embodiment of the present invention the headset 100 transmits and receives data in accordance with Bluetooth. That is, the encoder 144 encodes the data in accordance with the Bluetooth transmission protocol. The encoded data are communicated to a first converter 146 converting the encoded data into data packages to be transmitted by a transmitter 148.

The transceiver comprises a receiver 150 receiver data packages transmitted by connecting equipment described with reference to figure 1. The data packages are communicated to a second converter 152 converting the received data packages into protocol-encoded data, which is forwarded to a decoder 154 decoding the protocol-encoded data into data to be communicated to the second signal processing unit 124 via the second buffer 142.

## Claims

1. A headset (14) for communicating with a communication device (16; 20), and comprising an input section (102) adapted to convert a sound to a first signal; a processing section (104) adapted to process said first signal and transmit a first processed signal to said communication device, and adapted to receive a second signal from said communication device and to process said second signal into a second processed signal; and an output section (106) adapted to output said second processed signal; and wherein said processing section comprising an adaptation means (114, 116) adapted to determine environmental data in the form of data describing the surrounding acoustic environment of the input section of the headset from said first signal and/or in the form of data describing the signal quality of a received signal from said connecting communication device from said second signal and to select a signal processing setting for said processing section in accordance with said environmental data, **characterized in that** said processing section further comprising a data logger (116, 118) for generating an historic perspective of the use of the headset as well as a user's interactions with the headset controls during various acoustic environments, and is adapted to utilise the logging information for reconfiguring the signal processing setting for the specific surrounding acoustic environmental.

2. A headset according to claim 1, wherein the adaptation means comprises an environment unit adapted to generate the environmental data, such as a voice identification signal, a noise level signal, a wind level signal, from the first signal.

3. A headset according to claim 2, wherein the environment unit comprises a voice detector for detecting voice of a user of the headset, a noise detector for classifying noise level of the surround acoustic environment, and a wind detector for detecting wind sound effects in the surrounding acoustic environment.

4. A headset according to any of claims 2 to 3, wherein the environment unit further comprises a microphone matching utility for matching the one or more microphones.

5. A headset according to any of claims 2 to 4, wherein the environment unit further comprises a directionality utility for canceling disturbing far field noise and preserving nearfield signal (signal from the mouth of the user of the headset)

6. A headset according to any of claims 1 to 5, wherein the adaptation means further comprises a processor unit having an environment input adapted to receive the environmental data, having a categorisation element adapted to categorise the surrounding acoustic environment based on the environment data, having an input/output port adapted to connect to a memory unit storing one or more signal processing settings, having a selecting element adapted to select that signal processing setting associated with the surrounding acoustic environment, and having a control output adapted to control a signal processing unit in accordance with the signal processing setting.

7. A headset according to claim 6, wherein the signal processing unit comprises a filter bank adapted to filter the first and second signal into one or more frequency bands, an amplifier adapted to expand and/or compress signal in the one or more frequency bands.

8. A headset according to claim 7, wherein the signal processing unit further comprises a noise reduction element adapted to reduced noise in the first and second signal.

9. A headset according to any of claims 6 to 8, wherein the processor unit further comprises a user input/output port adapted to connect with a user-interface unit adapted to enable a user of the headset to adjust parameters of the signal processing setting.

10. A headset according to any of claims 6 to 9, wherein the processor unit further comprises a remark element adapted to generate a remark associated with current signal processing setting and to store said remark in the memory in association with the signal processing setting, and wherein said remark comprises logging information such as the processor unit's categorisation of said surrounding acoustic environment, the user's actions, and time.

11. A headset according to any of claims 6 to 10, wherein the processor unit further comprises an averaging element adapted to average the parameters stored in remarks associated with a specific signal processing setting.

12. A headset according to any of claims 1 to 10, wherein the processing section further comprises a transceiver unit adapted to transmit the first processed signal to the communication device, and adapted to receive the second signal from the communication device.

13. A headset according to any of claims 1 to 12, wherein the transceiver comprises a first protocol element adapted to communicate with a first communication network and a second protocol element adapted to communicate with a second communication network.

## Patentansprüche

1. Headset (14) zur Kommunikation mit einem Kommunikationsgerät (16; 20) und mit
einem Eingabeabschnitt (102), der angepasst ist, Schall in ein erstes Signal umzuwandeln;
einem Verarbeitungsabschnitt (104), der angepasst ist, das erste Signal zu verarbeiten und ein erstes verarbeitetes Signal an das Kommunikationsgerät zu senden und der angepasst ist, ein zweites Signal von dem Kommunikationsgerät zu empfangen und das zweite Signal in ein zweites verarbeitetes Signal zu verarbeiten; und
einem Ausgabeabschnitt (106), der angepasst ist, das zweite verarbeitete Signal auszugeben; und
wobei der Verarbeitungsabschnitt ein Adaptionsmittel (114, 116) aufweist, das angepasst ist, Umgebungsdaten in der Form von Daten, die die umliegende akustische Umgebung des Eingabeabschnitts des Headsets beschreiben, von dem ersten Signal und/oder in der Form von Daten, die die Signalqualität eines empfangenen Signals von dem verbindenden Kommunikationsgerät beschreiben, von dem zweiten Signal zu bestimmen und eine Signalverarbeitungseinstellung für den Verarbeitungsabschnitt entsprechend den Umgebungsdaten auszuwählen,
**dadurch gekennzeichnet, dass**
der Verarbeitungsabschnitt ferner eine Datenprotokolleinheit (116, 118) zur Erzeugung einer historischen Perspektive der Verwendung des Headsets und der Interaktion des Anwenders mit den Headset-Steuerungen bei verschiedenen akustischen Umgebungen aufweist und angepasst ist, die Protokolldaten zur Rekonfiguration der Signalverarbeitungseinstellung für die spezifische umliegende akustische Umgebung zu verwenden.

2. Headset nach Anspruch 1, wobei das Adaptionsmittel eine Umgebungseinheit aufweist, die angepasst ist, die Umgebungsdaten, beispielsweise ein Sprachidentifikationssignal, ein Rauschpegelsignal, ein Windpegelsignal, aus dem ersten Signal zu erzeugen.

3. Headset nach Anspruch 2, wobei die Umgebungseinheit einen Sprachdetektor zur Detektion von Sprache eines Anwenders des Headsets, einen Rauschdetektor zur Klassifizierung eines Rauschpegels der umliegenden akustischen Umgebung und einen Winddetektor zur Detektion von Windgeräuscheffekten in der umliegenden akustischen Umgebung aufweist.

4. Headset nach einem der Ansprüche 2 bis 3, wobei die Umgebungseinheit ferner eine Mikrofon-Abgleich-Funktion zum Abgleichen des einen oder mehrerer Mikrofone aufweist.

5. Headset nach einem der Ansprüche 2 bis 4, wobei die Umgebungseinheit ferner eine Richtungs-Funktion zur Beseitigung von störendem Fernfeldrauschen und zur Erhaltung eines Nahfeldsignals (Signal aus dem Mund des Nutzers des Headsets) aufweist.

6. Headset nach einem der Ansprüche 1 bis 5, wobei das Adaptionsmittel ferner eine Prozessoreinheit mit einem Umgebungseingang, der angepasst ist, die Umgebungsdaten zu empfangen, einem Klassifizierungselement, das angepasst ist, die umliegende akustische Umgebung basierend auf den Umgebungsdaten zu klassifizieren, einem Eingangs-/Ausgangsanschluss, der angepasst ist, sich mit einer Speichereinheit zu verbinden, die eine oder mehrere Signalverarbeitungseinstellungen speichert, einem Auswahlelement, das angepasst ist, die Signalverarbeitungseinstellung auszuwählen, die mit der umliegenden akustischen Umgebung assoziiert ist und einem Steuerausgang, der angepasst ist, eine Signalverarbeitungseinheit gemäß der Signalverarbeitungseinstellung zu steuern, aufweist.

7. Headset nach Anspruch 6, wobei die Signalverarbeitungseinheit eine Filterbank, die angepasst ist, das erste und zweite Signal in ein oder in mehrere Frequenzbänder zu filtern, einen Verstärker, der angepasst ist, ein Signal in dem einen oder den mehreren Frequenzbändern zu expandieren und/oder zu komprimieren, aufweist.

8. Headset nach Anspruch 7, wobei die Signalverarbeitungseinheit weiter ein Rauschreduktionselement umfasst, das angepasst ist, Rauschen in dem ersten und zweiten Signal zu reduzieren.

9. Headset nach einem der Ansprüche 6 bis 8, wobei die Prozessoreinheit weiterhin einen Anwender-Eingabe/Ausgabe-Anschluss aufweist, der angepasst ist, sich mit einer Anwenderschnittstelleneinheit zu verbinden, die angepasst ist, einem Anwender des Headsets zu ermöglichen, Parameter der Signalverarbeitungseinstellung einzustellen.

10. Headset nach einem der Ansprüche 6 bis 9, wobei die Prozessoreinheit weiterhin ein Hinweiselement aufweist, das angepasst ist, einen Hinweis zu erzeugen, der mit der aktuellen Signalverarbeitungseinstellung assoziiert ist, und den Hinweis in dem Speicher gemäß der Signalverarbeitungseinstellung zu speichern und wobei der Hinweis Protokolldaten, wie beispielsweise die Klassifizierung der umliegenden akustischen Umgebung der Prozessoreinheit, die Aktionen des Anwenders und Zeit, aufweist.

11. Headset nach einem der Ansprüche 6 bis 10, wobei die Prozessoreinheit weiterhin ein Mittelungselement aufweist, das angepasst ist, die Parameter, die in den Hinweisen gespeichert sind, die mit einer spezifischen Signalverarbeitungseinstellung assoziiert sind, zu mitteln.

12. Headset nach einem der Ansprüche 1 bis 10, wobei der Verarbeitungsbereich ferner eine Transceiver-Einheit aufweist, die angepasst ist, das erste verarbeitete Signal zu dem Kommunikationsgerät zu senden und die angepasst ist, das zweite Signal von dem Kommunikationsgerät zu empfangen.

13. Headset nach einem der Ansprüche 1 bis 12, wobei der Transceiver ein erstes Protokollelement aufweist, das angepasst ist, mit einem ersten Kommunikationsnetzwerk zu kommunizieren und ein zweites Protokollelement, das angepasst ist, mit einem zweiten Kommunikationsnetzwerk zu kommunizieren.

## Revendications

1. Micro-casque (14) pour la communication avec un appareil de communication (16 ; 20), et comprenant une section d'entrée (102) adaptée pour convertir un son en un premier signal ; une section de traitement (104) adaptée pour traiter ledit premier signal et transmettre un premier signal traité audit appareil de communication, et adaptée pour recevoir un second signal en provenance dudit appareil de communication et pour traiter ledit second signal en un second signal traité ; et une section de sortie (106) adaptée pour émettre ledit second signal traité ; et dans lequel ladite section de traitement comprend des moyens d'adaptation (114, 116) adaptés pour déterminer des données environnementales sous la forme de données décrivant l'environnement acoustique avoisinant de la section d'entrée du micro-casque à partir dudit premier signal et/ou sous la forme de données décrivant la qualité de signal d'un signal reçu en provenance dudit appareil de communication de connexion, à partir dudit second signal, et pour sélectionner un réglage de traitement des signaux pour ladite section de traitement en fonction desdites données environnementales, **caractérisé en ce que** ladite section de traitement comprend en outre un enregistreur de données (116, 118) pour la génération d'une perspective historique de l'utilisation du micro-casque ainsi que des interactions d'un utilisateur avec les commandes du micro-casque lors de différents environnements acoustiques, et est adaptée pour utiliser les informations d'enregistrement pour reconfigurer le réglage de traitement des signaux pour l'environnement acoustique avoisinant spécifique.

2. Micro-casque selon la revendication 1, dans lequel les moyens d'adaptation comprennent une unité d'environnement adaptée pour générer les données environnementales, telles qu'un signal d'identification de voix, un signal de niveau de bruit, un signal de niveau de vent, à partir du premier signal.

3. Micro-casque selon la revendication 2, dans lequel l'unité d'environnement comprend un détecteur de voix pour détecter la voix d'un utilisateur du micro-casque, un détecteur de bruit pour classifier le niveau de bruit de l'environnement acoustique avoisinant, et un détecteur de vent pour détecter les effets sonores du vent dans l'environnement acoustique avoisinant.

4. Micro-casque selon l'une quelconque des revendications 2 à 3, dans lequel l'unité d'environnement comprend en outre un équipement d'adaptation de microphone pour adapter le ou les microphones.

5. Micro-casque selon l'une quelconque des revendications 2 à 4, dans lequel l'unité d'environnement comprend en outre un équipement de directionnalité pour annuler le bruit en champ lointain perturbateur et pour préserver le signal en champ proche (signal provenant de la bouche de l'utilisateur du micro-casque).

6. Micro-casque selon l'une quelconque des revendications 1 à 5, dans lequel les moyens d'adaptation comprennent en outre un processeur ayant une entrée d'environnement adaptée pour recevoir les données environnementales, ayant un élément de catégorisation adapté pour catégoriser l'environnement acoustique avoisinant en fonction des données d'environnement, ayant un port d'entrée/sortie adapté pour la connexion à une mémoire stockant un ou plusieurs réglages de traitement des signaux, ayant un élément de sélection adapté pour sélectionner le réglage de traitement des signaux qui est associé à l'environnement acoustique avoisinant, et ayant une sortie de commande adaptée pour commander une unité de traitement de signaux en fonction du réglage de traitement des signaux.

7. Micro-casque selon la revendication 6, dans lequel l'unité de traitement de signaux comprend un banc de filtres adapté pour filtrer les premier et second signaux en une ou plusieurs bandes de fréquence, un amplificateur adapté pour étendre et/ou compresser un signal dans la ou les bandes de fréquence.

8. Micro-casque selon la revendication 7, dans lequel l'unité de traitement de signaux comprend en outre un élément de réduction du bruit adapté pour réduire le bruit dans les premier et deuxième signaux.

9. Micro-casque selon l'une quelconque des revendications 6 à 8, dans lequel le processeur comprend en outre un port d'entrée/sortie utilisateur adapté pour la connexion à une unité d'interface utilisateur adaptée pour permettre à un utilisateur du micro-casque d'ajuster les paramètres du réglage de traitement des signaux.

10. Micro-casque selon l'une quelconque des revendications 6 à 9, dans lequel le processeur comprend en outre un élément de commentaire adapté pour générer un commentaire associé au réglage de traitement des signaux en cours et pour stocker ledit commentaire dans la mémoire en association avec le réglage de traitement des signaux, et dans lequel ledit commentaire comprend des informations d'enregistrement telles que la catégorisation du processeur concernant ledit environnement acoustique avoisinant, les actions de l'utilisateur et l'heure.

11. Micro-casque selon l'une quelconque des revendications 6 à 10, dans lequel le processeur comprend en outre un élément de détermination de moyenne adapté pour déterminer la moyenne des paramètres stockés dans les commentaires associés à un réglage de traitement des signaux spécifique.

12. Micro-casque selon l'une quelconque des revendications 1 à 10, dans lequel la section de traitement comprend en outre un émetteur-récepteur adapté pour transmettre le premier signal traité à l'appareil de communication, et adapté pour recevoir le second signal en provenance de l'appareil de communication.

13. Micro-casque selon l'une quelconque des revendications 1 à 12, dans lequel l'émetteur-récepteur comprend un premier élément de protocole adapté pour communiquer avec un premier réseau de communication et un second élément de protocole adapté pour communiquer avec un second réseau de communication.
